Europäisches Patentamt

European Patent Office

Office européen des brevets

(19)

(11) Veröffentlichungsnummer: **0 145 987**
**B1**

(12) **EUROPÄISCHE PATENTSCHRIFT**

(45) Veröffentlichungstag der Patentschrift:
01.04.87

(51) Int. Cl.⁴: **H 02 K 1/16, H 02 K 5/128**

(21) Anmeldenummer: **84113965.2**

(22) Anmeldetag: **19.11.84**

(54) **Elektromaschine, insbesondere als Antrieb für eine Umwälzpumpe.**

(30) Priorität: **16.12.83 DE 3345581**

(43) Veröffentlichungstag der Anmeldung:
**26.06.85 Patentblatt 85/26**

(45) Bekanntmachung des Hinweises auf die Patenterteilung:
**01.04.87 Patentblatt 87/14**

(84) Benannte Vertragsstaaten:
**DE FR GB IT**

(56) Entgegenhaltungen:
**DE - A - 1 538 717**
**FR - A - 2 313 793**
**FR - A - 2 532 488**
**US - A - 3 845 340**

(73) Patentinhaber: **ROBERT BOSCH GMBH, Postfach 50,
D-7000 Stuttgart 1 (DE)**

(72) Erfinder: **Ahner, Peter, Dipl.-Ing., Wiesenstrasse 25,
D-7140 Ludwigsburg (DE)**
Erfinder: **Härer, Helmut, Dr. Dipl.-Ing., Obere
Weinbergstrasse 22, D-7148 Remseck 1 (DE)**
Erfinder: **Schustek, Siegfried, Dr. Dipl.-Ing.,
Adlerstrasse 21, D-7997 Immenstaad (DE)**

## Beschreibung

### Stand der Technik

Die Erfindung geht von einer Elektromaschine als Antrieb für eine Umwälzpumpe nach der Gattung des Hauptanspruchs aus. Aus der DE-PS 1 538 715 ist eine zum Antrieb von Umwälzpumpen bestimmte und mit einer solchen Pumpe baulich vereinigte Elektromaschine mit kugelförmigem Luftspalt bekannt. Sie hat jedoch den Nachteil, dass der Stator aus zusammengesetzten Ständerblechpaketen besteht, die verhältnismässig gross sind und somit viel Material und Platz benötigen. Ausserdem wurde schon eine Elektromaschine mit geringerem Raumbedarf vorgeschlagen. Sie hat einen Stator aus einem mit Wicklungsnuten versehenen hochkantgerollten Blechstreifen, dessen nebeneinanderliegende Windungen stumpfwinklige Kegelmantelflächen bilden. Dabei tritt der Nachteil auf, dass beim Hochkantrollen unerwünscht grosse Materialverformungen auftreten, so dass der Stator nur mit entsprechend grossen Presskräfte aufbringenden Werkzeugen und Pressen hergestellt werden kann und Luftspalte für Materialausweich zwischen den Eisenteilen vorgesehen sein müssen.

### Vorteile der Erfindung

Die erfindungsgemässe Elektromaschine mit den kennzeichnenden Merkmalen des Hauptanspruchs löst demgegenüber die Aufgabe, eine zum Betrieb einer Umwälzpumpe geeignete Elektromaschine mit einem kompakten Stator zu versehen, der bei geringem Raumbedarf und gutem elektrisch-mechanischem Wirkungsgrad einen geringen Aufwand an Material aufweist und sich darüber hinaus aus einem Blechstreifen ohne wesentliche Materialverformung wickeln lässt, so dass Aussparungen für verdrängtes Material nicht mehr benötigt werden.

Durch die in den Unteransprüchen aufgeführten Massnahmen sind vorteilhafte Weiterbildungen der im Hauptanspruch angegebenen Elektromaschine möglich. Besonders vorteilhaft ist ein aus zwei Teilen gewickelter Stator, der noch kompakter ausgebildet noch weniger Raum und Material benötigt.

### Zeichnung

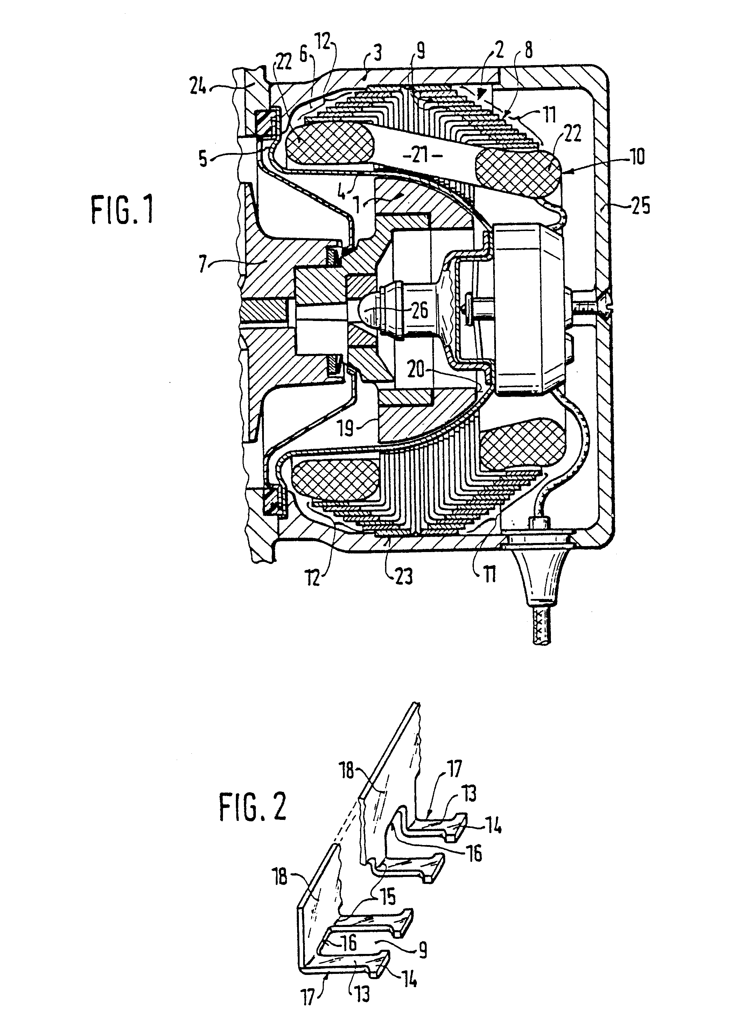

Ein Ausführungsbeispiel der Erfindung ist in der Zeichnung dargestellt und in der nachfolgenden Beschreibung näher erläutert. Es zeigen
Fig. 1 einen Elektromotor im Längsschnitt und
Fig. 2 zwei Abschnitte des für das Statorwickeln vorbereiteten Blechstreifens in räumlicher Darstellung.

### Beschreibung des Ausführungsbeispieles

Der dargestellte Elektromotor hat einen kugelschichtförmigen Rotor 1 und einen Stator 2, der in einem Gehäuse 3 angeordnet ist. In dem sphärischen Luftspalt zwischen dem Stator 2 und dem Rotor 1 ist eine Trennkalotte 4 aus nichtmagnetisierbarem Blech oder Kunststoff angeordnet, welche den rotorseitigen Innenraum 5 vom statorseitigen Innenraum 6 des Elektromotors trennt. Der Rotor 1 bildet eine bauliche Einheit mit einem Schleuderteller 7 einer an sich bekannten und nicht näher dargestellten Kreisel-Umwälzpumpe.

Der Stator 2 ist ringförmig ausgebildet und besteht aus einem gewickelten Blechpaket 8, mit zum Rotor 1 hin offenen Nuten 9, in denen Abschnitte einer Erregerwicklung 10 angeordnet sind. Das Blechpaket 8 ist aus zwei Wickelteilen 11 und 12 gebildet, die miteinander beispielsweise durch Schweissen verbunden sind. Jedes Wickelteil 11, 12 ist ringförmig aus einem durchgehenden Blechstreifen aus Weicheisen hergestellt. Sie werden auf einen der Form der Kalotte 4 entsprechenden Kern hochkantgewickelt. Vor dem Wickeln werden in den Blechstreifen konstanter Breite die Nuten 9 gestanzt, deren Abstand entsprechend dem Anwachsen des Wickeldurchmessers zunimmt. Zwischen den Nuten 9 werden somit Zähne 13 ausgebildet, deren Breite von einem zum anderen Ende des Blechstreifens zunimmt und die in Zahnköpfen 14 enden. Tiefe und Breite aller gestanzten Nuten (9) ist gleich. Anschliessend werden die Zähne 13 beispielsweise rechtwinklig abgebogen, so dass der genutete Blechstreifen L-förmig wird. Die Biegekante 15 verläuft dabei im wesentlichen im Bereich der Nuten 9 und rückt entsprechend der zunehmenden Zahnbreite zum Nutgrund 16 hin, so dass die Nuten 9 am Anfang des Blechstreifens sich durch den L-Schenkel 17 des Blechstreifens erstrecken und noch weit in den anderen L-Schenkeln 18 ragen, während am Ende des Blechstreifens Nutgrund 16 und Biegekante 15 in etwa zusammenfallen.

Das Blechpaket 8 wird zunächst auf den nicht dargestellten Kern mit der Form der Kugelkalotte 4 zwischen Wickelanfang und -ende begrenzende Ebenen 19 bzw. 20 des kugeligen Abschnitts des Rotors 1 gewickelt. Dabei werden die genuteten L-Schenkel 17 beginnend an den Ebenen 19; 20 hochkant gewickelt, so dass die Zahnköpfe 14 mit ihrer dem Rotor 1 zugewandten Seite eine Form des Kerns, d.h. der Trennkalotte 4 bilden und die Zähne 13 dicht aneinanderliegend senkrecht zur Längsachse des Elektromotors verlaufen. Die das Rückschlussjoch bildenden L-Schenkel 18 liegen dann stufenförmig aneinander und erstrecken sich parallel zur Längsachse des Elektromotors. Beim Wickeln des L-förmigen Blechstreifens treten lediglich im Zahnbereich des hochkantgewickelten L-Schenkels 17 geringe Materialverformungen auf, so dass sich die Wickelteile 11 und 12 mit einfachen Werkzeugen mit vertretbarem Kräftaufwand herstellen lassen. Die beiden Wickelteile 11 und 12 können für sich nacheinander auf dem Kern oder gleichzeitig auf einem geteilten Kern gewickelt werden. Dann werden die beiden Wickelteile 11 und 12 zum Blechpaket 8 zusammengesetzt, wobei die L-Schenkel 17 der äussersten Windung dicht aneinanderliegen, während die L-Schenkel 18 der beiden Wickelteile 11 und 12 sich in entgegengesetzter Richtung erstrecken. Das Blechpaket 8 wird durch Schweissen, beispielsweise Plasmaschweissen zusammengehalten auf beispielsweise auf dem bogenförmigen Aussenmantel des ringförmigen Blechpakets 8 in etwa gleichem Abstand in Umfangsrichtung von Stirnseite zu Stirnseite des Blechpakets 8 verlaufenden nicht näher dargestellten Schweissbahnen.

In den Nuten 9 des Blechpakets 8 ist ein Abschnitt 21 der Erregerwicklung 10 eingebettet, deren Wickelköpfe 22 im wesentlichen im Bereich innerhalb der L-Schenkel 18 der innersten, das ist jeweils die Anfangswindung der Wickelteile 11 bzw. 12 untergebracht sind.

Der Stator 2 ist durch den Aufbau aus zwei Wickelteilen 11 und 12 besonders raumsparend und kompakt mit verhältnismässig kleinem Durchmesser ausgebildet. Er ist am Aussenmantel mit einem Einpass 23 versehen im Gehäuse 3 formschlüssig eingebracht. Die magnetischen Weglängen sind durch den Aufbau des Stators 2 annähernd zur Hälfte in wünschenswerter Weise verkürzt. Besondere Haltemittel für einen Stator mit kugelkalottenförmiger Ausnehmung werden nicht mehr benötigt. Durch die Materialverformung lediglich an den hochkantgewickelten Zähnen 13 entfallen zudem alle zusätzlichen Luftspalten an den Stossstellen der Blechteile des Stators bekannter Lösungen, da das verformte Material in die Nuten 9 ausweichen kann, so dass die Zähne 13 dicht aneinander liegen können. Das ermöglicht zudem eine vorteilhafte Reduktion des Magnetisierungsbedarfs.

Das Gehäuse 3 des Elektromotors ist einerseits in an sich bekannter und nicht näher dargestellter Weise an das Pumpengehäuse 24 der Kreisel-Umwälzpumpe geschraubt, und andererseits mit einem Gehäusedeckel 25 verschlossen.

In der dargestellten stabilisierten Betriebslage läuft der auf einem Kugelzapfen 26 gelagerte Rotor 1 um die Längsachse des Elektromotors um und kann erforderlichenfalls um das im Schnittpunkt der Ebene 19 und der Längsachse gelegene Zentrum des Kugelzapfens 26 Taumelbewegungen ausführen und dabei etwaige Fremdkörper aus dem sphärischen Luftspalt zwischen Rotor 1 und Stator 2 entfernen, die zum Blockieren des Rotors 1 führen könnten beispielsweise nach längerem Stillstand von Umwälzpumpen für Hausheizungen und Brauchwasserversorgung.

Der Rotor 1 kann ein aus Blechscheiben gestapeltes Eisenblechpaket enthalten, das nach Art eines Kurzschlussläufers einen aus Aluminium oder Kupfer gegossenen Kurzschlusskäfig enthält. Wenn in dem Stator 2 mit der Erregerwicklung 10 ein umlaufendes Magnetfeld erzeugt wird, kann von diesem der Rotor 1 mitgenommen und dadurch die Umwälzpumpe angetrieben werden.

Der Rotor 1 kann auch ein durchgend aus einem Blechstreifen gewickeltes Eisenblechpaket enthalten, das auf den kugeligen Aussenmantel des Rotors aufgewickelt und in seinen durchgehenden Nuten mit einem eingegossenen Kurzschlusskäfig versehen ist.

Eine Ausführung des Rotors als Hystereseläufer ist ebenfalls möglich.

## Patentansprüche

1. Elektromaschine, insbesondere für eine Umwälzpumpe, mit einem Kugelschichtrotor (1) und einem diesen induzierenden, ringförmigen Stator (2) mit konkaver, kugeliger Aussparung, in welcher der Rotor dem Stator mit einem sphärischen auf einer gedachten Kugel verlaufenden Luftspalt gegenübersteht, in welchem eine den Statorraum (6) vom Rotorraum (5) trennende, unmagnetische Kalotte (4) angeordnet ist, und einem im Kugelmittelpunkt liegenden Kugelzapfen (26) zur Taumelbewegungen zulassenden Lagerung des Rotors, dadurch gekennzeichnet, dass der Stator (2) aus einem hochkantgewickelten durchgehenden Blechstreifen besteht, dessen nebeneinanderliegende Windungen L-förmigen Querschnitt und gegen den Luftspalt offene Nuten (9) haben, welche sich mindestens durch den gegen die Längsachse des Stators (2) gerichteten L-Schenkel (17) erstrecken, und deren Abstand zueinander dem Anwachsen des Windungsdurchmessers angepasst ist, wobei die Nuten die Zähne (13) zwischen sich einschliessen, die Zahnköpfe (14) – die konkave, kugelige Aussparung bildend – die Kalotte (4) umgeben, und die Nuten (9) jeweils einen den Stator (2) auf seiner gesamten axialen Stärke durchsetzenden Wicklungsabschnitt (21) seiner zur Erzeugung eines umlaufenden elektromagnetischen Feldes dienenden Erregerwicklung (10) enthalten, während der andere sich parallel zur Längsachse des Stators (2) erstreckende L-Schenkel (18) mit seinen Windungsrändern einen abgestuften, im wesentlichen bogenförmigen Aussenumfang des ringförmigen Stators (2) bildet.

2. Elektromaschine nach Anspruch 1, dadurch gekennzeichnet, dass der ringförmige Stator (2) aus zwei hochkantgewickelten Teilen (11 und 12) besteht, die mit ihrem senkrecht zur Statorlängsachse verlaufenden L-Schenkel (17) der jeweils äussersten Windung aneinanderliegend befestigt sind und die parallel zur Statorlängsachse verlaufenden L-Schenkel (18) der beiden Statorteile (2) in entgegengesetzte Richtung ragen.

3. Elektromaschine nach Anspruch 1 oder 2, dadurch gekennzeichnet, dass der gegen die Längsachse des Stators gerichtete L-Schenkel (17) senkrecht auf der Tangente in halber Höhe des Kugelschichtrotors verläuft.

4. Elektromaschine nach einem der Ansprüche 1 bis 3, dadurch gekennzeichnet, dass der ringförmige Stator (2) in einem Einpass (23) eines Maschinengehäuses (3) angeordnet ist.

## Claims

1. Electric machine, especially for a circulating pump, with a spherical-segment rotor (1) and an annular stator (2) inducing the latter and having a concave spherical recess, in which the rotor is located opposite the stator with a spherical air gap which extends over an imaginary sphere and in which is arranged a non-magnetic cup (4) separating the stator space (6) from the rotor space (5), and with a ball pin (26) located at the centre point of the sphere and intended for mounting the rotor so as to allow wobbling movements, characterized in that the stator (2) consists of a continuous sheet-metal strip wound edgewise, of which the turns adjacent to one another have an L-shaped cross-section and slots (9) which are open towards the air gap and extend at least through the L-leg (17) directed towards the longitudinal axis of the stator (2), and the distance between which matches the increase in the diameter of the turns, the slots including between them the teeth (13), the tooth tips (14) surrounding the cup (4) and forming the concave spherical recess, and the slots (9) each containing a winding portion (21) passing through the stator (2) over its entire axial thickness and belonging to its exciting winding (10) serving for generating a rotating electromagnetic field, whilst the other L-leg (18) extending parallel to the longitudinal axis of the stator (2) forms with its turn edges a stepped essentially arcuate outer periphery of the annular stator (2).

2. Electric machine according to claim 1, characterized in that the annular stator (2) consists of two parts (11 and 12) wound edgewise, which, each by means of the L-leg (17) extending perpendicularly to the longitudinal axis of the stator and belonging to the particular outermost turn, are fastened so as to rest against one another, and the L-legs (18) extending parallel to the longitudinal axis of the stator and belonging to the two stator parts (2) project in opposite directions.

3. Electric machine according to claim 1 or 2, characterized in that the L-leg (17) directed towards the longitudinal axis of the stator extends perpendicularly to the tangent at half the height of the spherical-segment rotor.

4. Electric machine according to one of claims 1 to 3, characterized in that the annular stator (2) is arranged in a fitting space (23) in a machine housing (3).

**Revendications**

1. Machine électrique notamment pour l'entraînement d'une pompe de circulation comportant un rotor sphérique à couches (1) et un stator d'induction de forme annulaire (2) avec une cavité concave sphérique dans laquelle le rotor est en regard du stator en formant un entrefer sphérique sur une sphère imaginaire, entrefer dans lequel est logée une calotte amagnétique (4) séparant le volume du stator (6) du volume du rotor (5) ainsi qu'un tourillon sphérique (26) situé au centre de la sphère pour permettre au palier du rotor d'effectuer des mouvements de mutation, caractérisée en ce que le stator (2) est formé d'une bande de tôle, continue, enroulée sur champ, dont les spires en regard ont une section en forme de L et présentent des rainures (9) ouvertes en direction de l'entrefer, et qui occupent au moins la branche (17) dirigée vers l'axe longitudinal du stator (2) et dont l'écartement est adapté à l'augmentation du diamètre de l'enroulement, les rainures entourant les dents (13), les têtes de dents (14) formant la calotte (4), creuse, concave, sphérique, et les rainures (9) comportant respectivement un segment d'enroulement (21) traversant le stator (22) sur toute son épaisseur axiale pour générer un champ électromagnétique tournant, et l'autre branche (18) parallèle à l'axe longitudinal du stator (2) étant échelonnée suivant ses bords de spire suivant une périphérie extérieure principalement courbe du stator annulaire (2).

2. Machine électrique selon la revendication 1, caractérisée en ce que le stator annulaire (2) se compose de deux parties (11, 12) enroulées sur champ, dont la branche (17) en L, perpendiculaire à l'axe longitudinal du stator de chaque enroulement respectivement à l'extérieur étant fixée de manière imbriquée et la branche (18) en L, parallèle à l'axe longitudinal du stator des deux parties (2) de stator étant dirigée en sens opposé.

3. Machine électrique selon la revendication 1 ou 2, caractérisée en ce que la branche (17) en L, tournée vers l'axe longitudinal du stator est perpendiculaire à la tangente à mi-hauteur du rotor sphérique à couches.

4. Machine électrique selon l'une des revendications 1 à 3, caractérisée en ce que le stator annulaire (2) est placé dans une rainure (23) du carter (3) de la machine.

FIG.1

FIG. 2